(19)

**Europäisches Patentamt**
**European Patent Office**
**Office européen des brevets**

(11)  **EP 2 032 626 B1**

(12)   **EUROPÄISCHE PATENTSCHRIFT**

(45) Veröffentlichungstag und Bekanntmachung des Hinweises auf die Patenterteilung:
**26.08.2009  Patentblatt 2009/35**

(51) Int Cl.:
**C08G 65/20** (2006.01)

(21) Anmeldenummer: **07729532.7**

(22) Anmeldetag: **25.05.2007**

(86) Internationale Anmeldenummer:
**PCT/EP2007/055105**

(87) Internationale Veröffentlichungsnummer:
**WO 2007/141148 (13.12.2007 Gazette 2007/50)**

(54) **VERFAHREN ZUR HERSTELLUNG VON POLYTETRAHYDROFURAN ODER TETRAHYDROFURAN-COPOLYMEREN**

METHOD FOR THE PRODUCTION OF POLYTETRAHYDROFURANE OR TETRAHYDROFURANE COPOLYMERS

PROCÉDÉ DE PRÉPARATION DE POLYTÉTRAHYDROFURANNE OU DE COPOLYMÈRES DE TÉTRAHYDROFURANNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.06.2006  DE 102006027233**

(43) Veröffentlichungstag der Anmeldung:
**11.03.2009  Patentblatt 2009/11**

(73) Patentinhaber: **BASF SE**
**67056 Ludwigshafen (DE)**

(72) Erfinder:
• **WABNITZ, Tobias**
  **68169 Mannheim (DE)**
• **HATSCHER, Stephan**
  **28857 Syke (DE)**
• **KÄSHAMMER, Stefan**
  **67105 Schifferstadt (DE)**
• **PINKOS, Rolf**
  **67098 Bad Dürkheim (DE)**

(56) Entgegenhaltungen:
**WO-A-20/04031260          DE-A1- 2 916 653**
**DE-A1- 4 316 137**

EP 2 032 626 B1

**Beschreibung**

Gegenstand der vorliegenden Erfindung ist ein Verfahren zur Herstellung von Polytetrahydrofuran oder Tetrahydrofuran-Copolymeren durch Polymerisation von Tetrahydrofuran, in Gegenwart eines Telogens und/oder eines Comonomers an einem sauren Festbett-Katalysator, wobei die Temperatur der Polymerisationsmischung in Durchflussrichtung des Katalysatorbetts ansteigt.

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es - wie auch manche seiner Derivate - in vielen Anwendungsfällen ein wertvoller Hilfsstoff, z.B. als Dispergiermittel oder beim Entfärben ("Deinken") von Altpapier.

PTHF wird technisch üblicherweise durch Polymerisation von Tetrahydrofuran (im folgenden "THF") an geeigneten Katalysatoren in Gegenwart von Reagenzien hergestellt, deren Zugabe die Steuerung der Kettenlänge der Polymerketten und so die Einstellung des mittleren Molekulargewichts ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF hergestellt werden. Erst durch anschließende Verseifung oder Umesterung entsteht PTHF selbst. Daher wird diese Herstellung als zweistufiges PTHF-Verfahren bezeichnet. PTHF lässt sich auch einstufig durch THF-Polymerisation mit Wasser, 1,4-Butandiol oder niedermolekularem PTHF als Telogen an sauren Katalysatoren herstellen.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Dialkohole. Dies können beispielsweise Ethylenglykol, Propylenglykol, Butylenglykol, 1,3-Propandiol, 1,4-Butandiol, 2-Butin-1,4-diol, 2,2-Dimethyl-1,3-propandiol, 1,6-Hexandiol oder niedermolekulares PTHF sein.

Weiterhin sind als Comonomere cyclische Ether, bevorzugt drei-, vier-.und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie z.B. 3-Methyltetrahydrofuran, 3,3-Dimethyltetrahydrofuran oder 3,4-Dimethyltetrahydrofuran geeignet.

Die Verwendung solcher Comonomere bzw. Telogene führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Großtechnisch werden überwiegend die oben erwähnten zweistufigen Verfahren durchgeführt, bei denen THF z.B. in Gegenwart von in der Regel heterogenen - d.h. weitgehend ungelöste - Katalysatoren zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt.

Neben der katalytischen Effizienz des heterogenen Katalysators üben sowohl andere Reaktionsparameter als auch deren Zusammenspiel mit dem ausgewählten Katalysator einen entscheidenden Einfluss auf das Polymerisationsergebnis, insbesondere auf Umsatz, Ausbeute und Produkteigenschaften wie die Farbzahl und die Molekulargewichtsverteilung des Polytetrahydrofuran oder des Tetrahydrofuran-Copolymeren aus.

Zur gezielten Einstellung einer engen Molekulargewichtsverteilung des Polymers ist es nach JP-B 10-025340 entscheidend, die Reaktionstemperatur während der gesamten Polymerisationsreaktion an Heteropolysäuren konstant zu halten.

Im Unterschied dazu lehren US-A 4 510 333 und DE-A 42 05 984, dass es zur Vermeidung von Farbzahlproblemen und für die Einstellung einer engen Molgewichtsverteilung sowohl an homogenen Katalysatoren - das heißt weitgehend in der Reaktionsmischung löslichen - wie Fluorsulfonsäure als auch an heterogenen Katalysatoren wie Bleicherden von Vorteil ist, wenn die Reaktionstemperatur im Lauf der Polymerisation schnell abgesenkt wird.

Aus EP-A 0 051 499 ist es bekannt, die Polymerisation von PTHF im homogenen Verfahren an Fluorsulfonsäure oder rauchender Schwefelsäure als Katalysator durchzuführen und das Verfahren in zwei Schritte aufzuteilen. Ein erster Schritt findet bei Temperaturen zwischen -30°C und +10°C statt, der zweite in einem zweiten Rührkessel bei Temperaturen, die zwischen 10 und 40°C über den zuerst genannten liegen. Bei hoher Produktreinheit wird dadurch eine Erhöhung des Umsatzes erreicht. Nachteilig ist, dass die großtechnische Umsetzung des beschriebenen Verfahrens zwei Rührreaktoren, einen hohen Steuerungsaufwand und wie bei Polymerisationen an homogenen Katalysatoren üblich, eine aufwendige Abtrennung notwendig machen.

Ausgehend von diesem Stand der Technik lag der vorliegenden Erfindung die Aufgabe zugrunde, ein Verfahren bereitzustellen, mit dem sich Polytetrahydrofuran und/oder Tetrahydrofuran-Copolymere mit enger mittlerer Molekulargewichtsverteilung wirtschaftlich, mit gutem Umsatz und geringer Farbzahl herstellen lassen.

Es wurde nun ein Verfahren zur Herstellung von Polytetrahydrofuran oder Tetrahydrofuran-Copolymeren durch Polymerisation von Tetrahydrofuran in Gegenwart eines Telogens und/oder eines Comonomers an einem sauren Festbett-Katalysator gefunden, das dadurch gekennzeichnet ist, dass die Temperatur der Polymerisationsmischung in Durchflussrichtung des Katalysatorbetts ansteigt.

Das Katalysatorfestbett kann sich in einem oder mehreren, ineinandergeschalteten, an sich bekannten Festbettreaktoren wie Rohrreaktoren befinden. Bevorzugt wird die Polymerisation in einem Festbettreaktor durchgeführt.

Die Polymerisation wird im allgemeinen bei Temperaturen von 0 bis 80°C, vorzugsweise von 25°C bis zur Siedetemperatur des THF, durchgeführt, wobei die Reaktionstemperatur so verstanden wird, dass sie der jeweiligen Temperatur der Polymerisationsmischung entspricht.Die Temperatur der Polymerisationsmischung (Reaktionstemperatur) zu Beginn des Katalysatorbetts beträgt 0 bis 50°C, bevorzugt 25 bis 45°C. Am Ende des Festbettbetts liegt die Temperatur erfindungsgemäß bei 30 bis 80°C, bevorzugt bei 35 bis 55°C.

Der erfindungsgemäße Temperaturanstieg beträgt mindestens 0,1 °C pro Meter Katalysatorbett, bevorzugt 0,2°C pro Meter Katalysatorbett und insbesondere bevorzugt mindestens 0,3°C pro Meter Katalysatorbett, wobei der Temperaturanstieg stetig oder in mindestens zwei Stufen, bevorzugt in zwei, drei, vier oder fünf Stufen, erfolgen kann. Bevorzugt erfolgt der Temperaturanstieg in Stufen mit einem Temperaturunterschied von 1 °C, bevorzugt 2,5°C. Der Temperaturanstieg sollte 5°C pro Meter Katalysatorbett nicht übersteigen.

Der Temperaturanstieg im Reaktor kann durch Verwendung einer an sich bekannten, industriell übliche Heizungs- oder Kühlvorrichtung mit entsprechender Messvorrichtung der jeweils lokalen Temperatur der Polymerisationsmischung wie zum Beispiel Thermoelementen erfolgen. Die Erwärmung kann dabei auch unter Verwendung von Prozesswärme erfolgen.

Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, bevorzugt 0,5 bis 2 bar.

Das erfindungsgemäße Verfahren ermöglicht es, PTHF und THF-Copolymere mit enger Molekulargewichtverteilung und mit einem höheren Umsatz des Telogens bei konstanter Produktqualität zu gewinnen. Eine verbesserte Verwertung des Telogens und/oder Comonomers trägt zu einer ökonomischen Verwertung von Rohstoffen bei und führt zu einem wirtschaftlichen Verfahren.

Bei dem erfindungsgemäßen Herstellungsverfahren für PTHF und THF-Copolymere wird in einem ersten Schritt ein Mono- und/oder Diester des PTHF's bzw. der THF Copolymere durch Polymerisation von THF bevorzugt in Gegenwart von Essigsäureanhydrid und gegebenenfalls Comonomeren an sauren, bevorzugt heterogenen Katalysatoren, hergestellt.

Geeignete Katalysatoren sind beispielsweise Katalysatoren auf Basis von Bleicherden wie sie beispielsweise in DE-A 1 226 560 beschrieben sind. Bleicherden, insbesondere auch aktivierte Montmorillonite, können als Formkörper im Festbett oder in Suspension verwendet werden.

Weiterhin sind Katalysatoren auf Basis gemischter Metalloxide, insbesondere der Gruppen 3, 4, 13 und 14 des Periodensystems der Elemente, für die Polymerisation von THF bekannt. So beschreibt die JP-A 04-306 228 die Polymerisation von THF in Gegenwart eines Carbonsäureanhydrids an einem gemischten Metalloxid bestehend aus Metalloxiden der Formel $M_xO_y$ mit ganzzahligen x und y im Bereich 1-3. Genannt werden als Beispiele $Al_2O_3$-$SiO_2$, $SiO_2$-$TiO_2$, $SiO_2$-$ZrO_2$ und $TiO_2$-$ZrO_2$. Heteropolysäuren, insbesondere $H_3PW_{12}O_{40}$ und $H_3PMo_{12}O_{40}$ können auf einem Träger, bevorzugt jedoch ungeträgert als Katalysatoren eingesetzt werden.

Die US 5,208,385 offenbart Katalysatoren auf Basis amorpher Silicium/Aluminium-Mischoxide. Auch Mischoxide auf Basis $SnO_2$/$SiO_2$, $Ga_2O_3$/$SiO_2$, $Fe_2O_3$/$SiO_2$, $In_2O_3$/$SiO_2$, $Ta_2O_5$/$SiO_2$ und $HfO_2$/$SiO_2$ sind bekannt. Die vorgenannten Katalysatoren werden bevorzugt durch Copräzipitation/Sol-Gel-Methoden hergestellt. Trägerkatalysatoren sind in der DE-A 44 33 606 offenbart, wobei Wolfram- oder Molybdänoxide auf z.B. $ZrO_2$ $TiO_2$, $HfO_2$, $Y_2O_3$, $Fe_2O_3$, $Al_2O_3$, $SnO_2$, $SiO_2$ oder ZnO aufgebracht werden. Weiterhin werden $ZrO_2$/$SiO_2$-Katalysatoren empfohlen, bei denen der Träger eine Alkalimetall-Konzentration < 5000 ppm aufweist.

Katalysatoren auf Basis saurer Ionentauscher sind in US 4,120,903 für die Polymerisation von THF, insbesondere alpha-Fluorsulfonsäure enthaltende Polymere (beispielsweise Nafion®), in Gegenwart von Essigsäureanhydrid beschrieben. Weiterhin sind Katalysatoren, die ein Metall und Perfluoralkylsulfonsäure-Anionen enthalten für die THF-Polymerisation geeignet.

Daneben sind als Polymerisationskatalysatoren noch weitere gegebenenfalls aktivierte Tonmineralien bekannt, offenbart beispielsweise in der WO 94/05719, WO 96/23833, WO 98/51729, WO 99/12992 und DE-A 195 134 93. Auch Zeolithe sind als Katalysatoren geeignet und werden beispielsweise in DE-A 43 16 138 beschrieben. Schließlich sind noch sulfatisierte Zirkonoxide, sulfatisierte Aluminiumoxide, geträgerte Heteropolysäuren und geträgertes Ammoniumbifluorid ($NH_4F$*HF) oder Antimonpentafluorid als geeignete Polymerisationskatalysatoren bekannt. Bevorzugt wird das erfindungsgemäße Verfahren mit aktivierten Bleicherden durchgeführt.

Als Vorbehandlung des Katalysators kommt beispielsweise das Trocknen mit auf 80 bis 200°C, bevorzugt auf 100 bis 180°C erwärmten Gasen, wie z.B. Luft oder Stickstoff, in Frage.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Das Verfahren kann diskontinuierlich oder kontinuierlich betrieben werden, wird jedoch aus wirtschaftlichen Gründen bevorzugt kontinuierlich betrieben.

Da Telogene zum Kettenabbruch führen, lässt sich über die eingesetzte Telogenmenge das mittlere Molekulargewicht des herzustellenden Polymers steuern. Als Telogen eignen sich $C_2$- bis $C_{12}$-Carbonsäureanhydride und/oder Gemische von Protonsäuren mit $C_2$- bis $C_{12}$-Carbonsäureanhydrid. Die Protonsäuren sind bevorzugt organische oder anorganische Säuren, die im Reaktionssystem löslich sind. Beispiele sind $C_2$- bis $C_{12}$-Carbonsäuren wie Essigsäure oder Sulfonsäuren, Schwefelsäure, Salzsäure, Phosphorsäure. Bevorzugt werden Essigsäureanhydrid und/oder Essigsäure verwendet. Im ersten Schritt, der Polymerisation, werden daher Mono- und Diester des PTHF's oder der THF-Copolymere gebildet.

Die Konzentration des als Telogen eingesetzten Essigsäureanhydrids in dem Polymerisationsreaktor zugeführten Eduktgemisch (Feed) liegt zwischen 0,03 bis 30 mol-%, bevorzugt bei 0,05 bis 20 mol-%, besonders bevorzugt bei 0,1 bis 10 mol-%, bezogen auf das eingesetzte THF. Wird zusätzlich Essigsäure verwendet, so beträgt das Molverhältnis im Feed der laufenden Polymerisation üblicherweise 1 : 20 bis 1 : 20000, bezogen auf eingesetztes Essigsäureanhydrid.

Die Mono- und Diester der THF-Copolymere lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, die THF-Derivate 2-Methyltetrahydrofuran oder 3-Methyltetrahydrofuran, wobei 2-Methyltetrahydrofuran oder 3-Methyltetrahydrofuran besonders bevorzugt sind.

Ebenso ist die Verwendung von $C_2$- bis $C_{12}$-Diolen als Comonomeren möglich. Dies können beispielsweise Ethylenglykol, Propylenglykol, Butylenglykol, Neopentylglykol, 1,3-Propandiol, 2-Butin-1,4-diol, 1,6-Hexandiol oder niedermolekulares PTHF sein. Weiterhin sind als Comonomere cyclische Ether wie 1,2-Alkylenoxide, zum Beispiel Ethylenoxid oder Propylenoxid, 2-Methyltetrahydrofuran oder 3-Methyltetrahydrofuran geeignet.

In der erfindungsgemäßen Festbettfahrweise kann der Polymerisationsreaktor in Sumpffahrweise, d. h. das Reaktionsgemisch wird von unten nach oben geführt, oder in Rieselfahrweise, d. h. das Reaktionsgemisch wird von oben nach unten durch den Reaktor geführt, betrieben werden. Das Eduktgemisch (Feed) aus THF und Telogen und/ oder Comonomer wird dem Polymerisationsreaktor kontinuierlich zugeführt, wobei die Katalysatorbelastung 0,01 bis 2,0 kg THF/(l*h), bevorzugt 0,02 bis 1,0 kg THF/(l*h) und besonders bevorzugt 0,04 bis 0,5 kg THF/(l*h) beträgt.

Weiterhin kann der Polymerisationsreaktor im geraden Durchgang, d. h. ohne Produktrückführung, oder im Umlauf, d. h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 150 : 1, bevorzugt kleiner 100 : 1 und bevorzugt kleiner 60 : 1.

Je nach Telogengehalt der Polymerisationsmischung lassen sich mit dem Verfahren Mono- und/oder Diester des PTHF oder der THF-Copolymere mit mittleren Molekulargewichten von 250 bis 10000 Dalton gezielt herstellen, vorzugsweise werden mit dem erfindungsgemäßen Verfahren die betreffenden PTHF-Ester mit mittleren Molekulargewichten von 500 bis 5000 Dalton, besonders bevorzugt 650 bis 4000 Dalton hergestellt. Unter der Bezeichnung "mittleres Molekulargewicht" oder "mittlere Molmasse" wird in dieser Anmeldung das Zahlenmittel $M_n$ des Molekulargewichts der Polymere verstanden, dessen Bestimmung z.B. durch nasschemische OH-Zahlbestimmung nach DIN 53 240 erfolgt.

Der THF-haltige Austrag aus der Polymerisationsstufe wird filtriert um Spuren des Polymerisationskatalysators zurückzuhalten und im Anschluss der destillativen THF-Abtrennung zugeführt. Es kann jedoch auch zuerst nicht umgesetztes THF abgetrennt werden und dann die verbleibenden Mono- oder Diester des PTHFs von Katalysatorrückständen durch Filtration befreit werden. Die zweite Methode gilt als bevorzugt. Als Filtereinrichtungen werden industriell übliche Schichtenfilter verwendet.

Die Estergruppen in den so erhaltenen Polymeren müssen in einem zweiten Schritt umgewandelt werden. Eine übliche Methode stellt die durch alkalische Katalysatoren initiierte Umsetzung mit niederen Alkoholen dar. Die Umesterung mit alkalischen Katalysatoren ist aus dem Stand der Technik bekannt und beispielsweise in DE-A 101 20 801 und DE-A 197 42 342 beschrieben. Bevorzugt wird Methanol als niederer Alkohol und als wirksamer Umesterungskatalysator Natriummethylat verwendet.

Die erhaltenen Polymere können durch Umsetzung mit organischen Isocyanaten in an sich bekannter Weise zur Polyurethan- und Polyurethanharnstoffherstellung insbesondere zur Herstellung von thermoplastischen Urethanen, Spandex, thermoplastischen Etherestern oder Copolyetheramiden, zur Herstellung von Polyurethanpolymerisaten bzw. Polyurethanharnstoffpolymerisaten, wie sie z.B. zur Herstellung elastischer Fasern, auch Spandex oder Elasthan genannt, thermoplastischen Polyurethans (TPU) oder von Polyurethangiesselastomeren (Cast elastomers) benötigt werden, verwendet werden.

Dabei wird in an sich bekannter Weise PTHF oder ein THF-Copolymer zunächst mit einem organischen Diisocyanat im Überschuss und dann mit einem organischen Diamin umgesetzt wie dies beispielsweise in der JP-A 07-278 246 beschrieben ist.

Die Erfindung wird im Weiteren anhand von Beispielen näher erläutert.

Beispiele

Molekulargewichtsbestimmung

Das mittlere Molekulargewicht $M_n$, in Form des Zahlenmittel des Molekulargewichtes, definiert als die Masse aller PTHF-Moleküle dividiert durch ihre Menge in Mol, wird durch die Bestimmung der Hydroxylzahl in Polytetrahydrofuran bestimmt. Unter der Hydroxylzahl wird diejenige Menge an Kaliumhydroxid in mg verstanden, die der bei der Acetylierung von 1 g Substanz gebundenen Menge Essigsäure äquivalent ist, Die Hydroxylzahl wird bestimmt durch die Veresterung der vorhandenen Hydroxylgruppen mit einem Überschuß an Essigsäureanhydrid.

$$H\text{-}[O(CH_2)_4]_n\text{-}OH + (CH_3CO)_2 \rightarrow CH_3CO\text{-}[O(CH_2)_4]_n\text{-}O\text{-}COCH_3 + H_2O$$

Nach der Umsetzung wird das überschüssige Essigsäureanhydrid gemäß folgender Reaktionsgleichung mit Wasser hydrolysiert

$$(CH_3CO)_2O + H_2O \rightarrow 2\ CH_3COOH$$

und als Essigsäure mit Natronlauge zurücktitriert.

Bestimmung Eindampfrückstand

Der Eindampfrückstand ist der unter festgelegten Bedingungen ermittelte nicht verdampfbare Anteil in PTHF oder PTHF-ester-Leichtsiedergemischen und dient als Maß für die Ausbeute. Eine Probe wird zur Bestimmung des EDR 30 min bei 145°C unter Normaldruck und 30 min bei gleicher Temperatur und einem Vakuum kleiner 1 mbar in einem Verdampferkolben eingedampft. Der Eindampfrückstand wird errechnet nach

$$EDR = \frac{m_2 \times 100}{m_1}$$

Hierbei bedeuten

EDR = Eindampfrückstand, Massenkonzentration nach DIN 1310 in g/100 g
$m_1$ = Masse in g des Verdampferkolbens mit der Probe
$m_2$ = Masse in g des Verdampferkolbens mit dem Eindampfrückstand
100 = Umrechnungsfaktor von g in 100 g

Methode

Zur Bestimmung des Eindampfrückstands wurde die zuvor gewogene Probe am Rotationsverdampfer 1 h lang bei 145°C und bei Normaldruck und dann 1 h lang bei gleicher Temperatur bei 0,1 bis 0,2 mbar behandelt und erneut gewogen. Der Eindampfrückstand ergab sich als das prozentuale Gewichtsverhältnis zum Anfangswert.

Bestimmung der Farbzahl

Die vom Lösungsmittel befreiten Polymere werden unbehandelt in einem Flüssigkeitsfarbmessgerät LICO 200 der Fa. Dr. Lange vermessen. Es werden Präzisionsküvetter Typ Nr. 100-QS (Schichtdicke 50 mm, Fa. Helma) verwendet.

Beispiel 1

Aus Bleicherde (K10-Pulver der Firma Süd-Chemie) wurden Strangpresslinge mit einem durchschnittlichen Durchmesser von 1.5 mm hergestellt und unmittelbar vor der Verwendung bei 150°C getrocknet. Je 200 ml (130 g) der getrockneten Katalysatorstrangpresslinge wurden in zwei hintereinander geschaltete, jeweils mit einem thermostatisierten Kühlmantel versehene Reaktionsrohre (Innendurchmesser 3 cm, nutzbare Länge 30 cm) aus Glas gegeben, sodass sich ein Katalysatorbett einer nutzbare Gesamtlänge von 60 cm ergab. Die Temperaturen am Eingang des ersten Reaktionsrohrs, d.h. am Anfang des Katalysatorbetts, (P1) und am Ausgang des zweiten Reaktionsrohrs, am Ende des Katalysatorbetts, (P2) wurden durch getrennte Thermostate geregelt. Die Temperaturerhöhung in Durchflussrichtung des Katalysatorbetts wurde auf 2,46°C pro 60 cm Katalysatorbett eingestellt. Der Reaktor wurde bei 35°C am Eingang des ersten Reaktionsrohrs mit einer Polymerisationsmischung aus THF und 3,5% Essigsäureanhydrid geflutet. Die Polymerisationsmischung wurde durch eine Pumpe kontinuierlich in der Reaktionsapparatur im Kreis durch den Reaktor geführt, so dass bei einem konstanten Umlauf:Zulauf Verhältnis von 15:1 in jeder Stunde weitere 30 g der Polymerisationsmischung in den Reaktor eingetragen wurden, während die gleiche Menge Produktmischung aus dem Kreislauf entnommen wurde. Zur Analyse wurden die leichtflüchtigen Anteile des Reaktionsaustrags, d.h. im wesentlichen nicht umgesetztes THF und Essigsäureanhydrid, im Vakuum bei zunächst 70°C/30 mbar, dann bei 170°C/0.3 mbar verdampft und der polymere Rückstand wurde analysiert. Das Ergebnis ist in Tabelle 1 zusammengefasst.

Vergleichsbeispiel

Entsprechend dem erfindungsgemäßen Beispiel 1 wurde die hineinandergeschalteten Rohrreaktoren mit Katalysator gefüllt. Im Unterschied zum erfindungsgemäßen Beispiel wurde keine Temperaturerhöhung in Durchflussrichtung des Katalysatorbetts eingestellt Der Reaktor wurde bei 35°C am Eingang des ersten Reaktionsrohrs mit einer Polymerisationsmischung aus THF und 3,5% Essigsäureanhydrid geflutet. Die Polymerisationsmischung wurde durch eine Pumpe kontinuierlich in der Reaktionsapparatur im Kreis durch den Reaktor geführt, so dass bei einem konstanten Umlauf:Zulauf-Verhältnis von 15:1 in jeder Stunde weitere 30 g der Polymerisationsmischung in den Reaktor eingetragen wurden, während die gleiche Menge Produktmischung aus dem Kreislauf entnommen wurde. Zur Analyse wurden die leichtflüchtigen Anteile des Reaktionsaustrags, d.h. im wesentlichen nicht umgesetztes THF und Essigsäureanhydrid, im Vakuum bei zunächst 70°C/30 mbar, dann bei 170°C/0.3 mbar verdampft und der polymere Rückstand wurde analysiert. Das Ergebnis ist in Tabelle 1 zusammengefasst.

Tabelle 1

|  | T1 [°C] an P1 | T2 [°C] an P2 | T [°C m$^{-1}$] | Eindampfrückstand (EDR) | Molekulargewicht [Mn] |
|---|---|---|---|---|---|
| Beispiel 1 | 35 | 37,5 | 4,1 | 60,1% | 2115 |
| Vergleichsbeispiel 1 | 35 | 35 | 0 | 59,0% | 2093 |

**Patentansprüche**

1.  Verfahren zur Herstellung von Polytetrahydrofuran oder Tetrahydrofuran-Copolymeren durch Polymerisation von Tetrahydrofuran, in Gegenwart eines Telogens und/oder eines Comonomers an einem sauren Festbett-Katalysator, **dadurch gekennzeichnet, dass** die Temperatur der Polymerisationsmischung in Durchflussrichtung des Katalysatorbetts ansteigt.

2.  Verfahren nach Anspruch 1, **dadurch gekennzeichnet, dass** die Temperatur der Polymerisationsmischung zu Beginn des Katalysatorbetts bei 0 bis 50°C und am Ende bei 30 bis 80°C liegt.

3.  Verfahren nach einem der Ansprüche 1 oder 2, **dadurch gekennzeichnet, dass** der Temperaturanstieg in Durchflussrichtung des Katalysatorbetts stetig oder in Stufen erfolgt.

4.  Verfahren nach einem der Ansprüche 1 bis 3, **dadurch gekennzeichnet, dass** sich das Katalysatorbett in einem oder mehreren Reaktoren befindet.

5.  Verfahren nach einem der Ansprüche 1 bis 4, **dadurch gekennzeichnet, dass** der Temperaturanstieg in Durchflussrichtung des Katalysatorbetts mindestens 0,1 °C pro Meter Katalysatorbett beträgt.

6.  Verfahren nach einem der Ansprüche 1 bis 5, **dadurch gekennzeichnet, dass** der Temperaturanstieg in Durchflussrichtung des Katalysatorbetts mindestens 0,2°C pro Meter Katalysatorbett beträgt.

**7.** Verfahren nach einem der Ansprüche 1 bis 6, **dadurch gekennzeichnet, dass** der Temperaturanstieg in Durchflussrichtung des Katalysatorbetts mindestens 0,3°C pro Meter Katalysatorbett beträgt.

**8.** Verfahren nach einem der Ansprüche 1 bis 7, **dadurch gekennzeichnet, dass** der Katalysator ausgewählt ist aus Bleicherden, gemischten Metalloxiden der Gruppen 3, 4, 13 und 14 des Periodensystems der Elemente, geträgerten Wolfram- oder Molybdänoxiden, sauren Ionenaustauschern, Zeolithen und/oder sulfatisierten Zirkonoxiden.

**Claims**

**1.** A process for preparing polytetrahydrofuran or tetrahydrofuran copolymers by polymerization of tetrahydrofuran in the presence of a telogen and/or a comonomer over a fixed bed of an acid catalyst, wherein the temperature of the polymerization mixture increases in the direction of flow through the catalyst bed.

**2.** The process according to claim 1, wherein the temperature of the polymerization mixture at the beginning of the catalyst bed is from 0 to 50°C and that at the end is from 30 to 80°C.

**3.** The process according to claim 1 or 2, wherein the temperature increase in the direction of flow through the catalyst bed is continual or in steps.

**4.** The process according to any of claims 1 to 3, wherein the catalyst bed is located in one or more reactors.

**5.** The process according to any of claims 1 to 4, wherein the temperature increase in the direction of flow through the catalyst bed is at least 0.1 °C per meter of catalyst bed.

**6.** The process according to any of claims 1 to 5, wherein the temperature increase in the direction of flow through the catalyst bed is at least 0.2°C per meter of catalyst bed.

**7.** The process according to any of claims 1 to 6, wherein the temperature increase in the direction of flow through the catalyst bed is at least 0.3°C per meter of catalyst bed.

**8.** The process according to any of claims 1 to 7, wherein the catalyst is selected from among bleaching earths, mixed metal oxides of groups 3, 4, 13 and 14 of the Periodic Table of the Elements, supported tungsten oxides or molybdenum oxides, acid ion exchangers, zeolites and/or sulfated zirconium oxides.

**Revendications**

**1.** Procédé pour la préparation de polytétrahydrofuranne ou de copolymères de tétrahydrofuranne par polymérisation de tétrahydrofuranne en présence d'un télogène et/ou d'un comonomère sur un catalyseur acide en lit fixe, **caractérisé en ce que** la température du mélange de polymérisation augmente dans le sens d'écoulement du lit de catalyseur.

**2.** Procédé selon la revendication 1, **caractérisé en ce que** la température du mélange de polymérisation se situe, au début du lit de catalyseur, à 0 jusqu'à 50°C et à la fin à 30 jusqu'à 80°C.

**3.** Procédé selon l'une quelconque des revendications 1 ou 2, **caractérisé en ce que** l'augmentation de la température dans le sens d'écoulement du lit de catalyseur augmente en continu ou par paliers.

**4.** Procédé selon l'une quelconque des revendications 1 à 3, **caractérisé en ce que** le lit de catalyseur se trouve dans un ou plusieurs réacteurs.

**5.** Procédé selon l'une quelconque des revendications 1 à 4, **caractérisé en ce que** l'augmentation de la température dans le sens d'écoulement du lit de catalyseur est d'au moins 0,1°C par mètre de lit de catalyseur.

**6.** Procédé selon l'une quelconque des revendications 1 à 5, **caractérisé en ce que** l'augmentation de la température dans le sens d'écoulement du lit de catalyseur est d'au moins 0,2°C par mètre de lit de catalyseur.

7. Procédé selon l'une quelconque des revendications 1 à 6, **caractérisé en ce que** l'augmentation de la température dans le sens d'écoulement du lit de catalyseur est d'au moins 0,3°C par mètre de lit de catalyseur.

8. Procédé selon l'une quelconque des revendications 1 à 7, **caractérisé en ce que** le catalyseur est choisi parmi les terres de blanchiment, les oxydes de métaux mixtes des groupes 3, 4, 13 et 14 du système périodique des éléments, les oxydes de tungstène ou de molybdène supportés, les échangeurs d'ions acides, les zéolithes et/ou les oxydes de zirconium sulfatés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10025340 B
- US 4510333 A
- DE 4205984 A
- EP 0051499 A
- DE 1226560 A
- JP 4306228 A
- US 5208385 A
- DE 4433606 A
- US 4120903 F
- WO 9405719 A
- WO 9623833 A
- WO 9851729 A
- WO 9912992 A
- DE 19513493 A
- DE 4316138 A
- DE 10120801 A
- DE 19742342 A
- JP 7278246 A